**Europäisches Patentamt**

**European Patent Office**

**Office européen des brevets**

(11) Numéro de publication : **0 367 648 B1**

(12) **FASCICULE DE BREVET EUROPEEN**

(45) Date de publication du fascicule du brevet :
**23.12.92 Bulletin 92/52**

(21) Numéro de dépôt : **89402840.6**

(22) Date de dépôt : **13.10.89**

(51) Int. Cl.⁵ : **B23K 26/00, B23K 26/08**

(54) **Procédé et dispositif de soudage à distance d'un manchon dans un tube notamment dans un générateur de vapeur de centrale nucléaire.**

(30) Priorité : **14.10.88 FR 8813602**

(43) Date de publication de la demande :
**09.05.90 Bulletin 90/19**

(45) Mention de la délivrance du brevet :
**23.12.92 Bulletin 92/52**

(84) Etats contractants désignés :
**BE CH DE ES FR GB LI SE**

(56) Documents cités :
**EP-A- 0 222 635**
**EP-A- 0 238 171**
**EP-A- 0 244 283**

(56) Documents cités :
**THE BELL SYSTEM TECHNICAL JOURNAL
vol. 62, no. 8, part 1, Octobre 1983, pages
2479-2492 ; C. LIN et al. : "High-Power Lasersand Optical Waveguides for robotic Mate-
rial-Processing Application"
PATENT ABSTRACTS OF JAPAN vol. 5, no.
143 (M-87)(815), 9 September 1981 ; & JP-A-56
74393 (TOKYO SHIBAURA DENKI K.K.)
PATENT ABSTRACTS OF JAPAN, vol. 4, no.
164 (M-41)(646), 14 November 1980 ; & JP-A-55
114490 (TOKYO SHIBAURA DENKI K.K.)**

(73) Titulaire : **FRAMATOME
Tour Fiat 1, Place de la Coupole
F-92400 Courbevoie (FR)**

(72) Inventeur : **Griffaton, Jacques
6, rue Saint-Georges
F-71000 Chalon-Sur-Saone (FR)**

(74) Mandataire : **Bourely, Paul et al
SOSPI 14-16, rue de la Baume
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

L'invention concerne le soudage à distance d'un manchon dans un tube. Elle s'applique notamment à la restauration de l'étanchéité des tubes de générateurs de vapeur d'un réacteur nucléaire à eau sous pression.

Les générateurs de vapeur de telles centrales comportent généralement un faisceau constitué d'un très grand nombre de tubes de petit diamètre pliés en U et fixés à chacune de leur extrémités par sertissage dans une plaque tubulaire de forte épaisseur. La partie du générateur de vapeur située en dessous de la plaque tubulaire constitue une boîte à eau dans une première partie de laquelle l'eau "primaire" sous pression venant de la cuve du réacteur est répartie dans les tubes du faisceau. Dans une seconde partie l'eau ayant circulé dans les tubes est récupérée, pour être renvoyée, par une conduite du circuit primaire du réacteur, dans la cuve renfermant le coeur constitué par les assemblages combustibles assurant l'échauffement de l'eau sous pression. L'eau d'alimentation du générateur de vapeur vient en contact avec la surface extérieure des tubes du faisceau, dans la partie du générateur de vapeur située au dessus de la plaque tubulaire, pour y être transformée en vapeur et cette vapeur est envoyée à la turbine associée au réacteur nucléaire.

Les parois des tubes du faisceau constituent donc une barrière entre l'eau sous pression constituant le fluide primaire du réacteur et l'eau d'alimentation constituant le fluide secondaire. Le fluide primaire qui vient en contact avec les assemblages combustibles et les structures internes de la cuve du réacteur contient des produits radioactifs en quantité plus ou moins importante. Il convient donc d'éviter toute mise en contact du fluide primaire et du fluide secondaire dont la contamination pourrait avoir des conséquences très néfastes. Il faut pour cela éviter au maximum l'apparition de fuites à travers les parois des tubes du faisceau du générateur de vapeur et réparer le plus vite possible et de façon efficace les tubes dont la paroi est percée.

De telles réparations sont généralement nécessaires pendant la durée de vie normale du réacteur. En effet, du fait des contraintes d'origine thermique et mécanique ou de la corrosion subies par les tubes du faisceau, des fissures peuvent prendre naissance dans les parois des tubes du faisceau, aussi bien du côté primaire que du côté secondaire. Ces réparations sont effectuées pendant les phases d'entretien du réacteur nucléaire.

On connait un procédé de réparation des tubes du faisceau d'un générateur de vapeur par manchonnage de ces tubes, au niveau du défaut entraînant une perte d'étanchéité. Un manchon d'un diamètre extérieur un peu inférieur au diamètre intérieur du tube à réparer et d'une longueur suffisante pour recouvrir la zone défectueuse est introduit dans le tube, par la face d'entrée de la plaque tubulaire sur laquelle affleurent les extrémités des tubes. Il y est placé de façon à affleurer la face d'entrée de la plaque tubulaire pour les tubes situés dans la partie centrale de celle-ci, ou à mi épaisseur de la plaque tubulaire pour les tubes situés en périphérie de celle-ci. Il est alors fixé à l'intérieur du tube de manière à réaliser deux jonctions étanches entre lui et le tube de part et d'autre de la zone défectueuse.

Toutes ces opérations nécessitent d'intervenir à l'intérieur de la boîte à eau du générateur de vapeur, c'est-à-dire dans une partie de ce générateur qui a été en contact avec le fluide primaire chargé de produits radioactif, pendant le fonctionnement du réacteur, et où un opérateur humain se trouve soumis à une forte radioactivité.

On a donc proposé des dispositifs automatiques et commandés à distance capables de réaliser au moins partiellement les opérations nécessaires pour le manchonnage des tubes, notamment un soudage du manchon dans le tube à chaque extrémité du manchon.

Le brevet US-A-4,694,136 décrit un dispositif pour effectuer un tel soudage. Ce dispositif comporte une tête de soudage optique installée dans le tube et un laser de puissance situé à l'extérieur de la boîte à eau du générateur de vapeur. Le transport du faisceau se fait par des moyens optiques en voie aérienne, entre le laser situé à l'extérieur de la boîte à eau du générateur de vapeur et la tête de soudage.

Ce dispositif nécessite la mise en oeuvre et l'installation au pied du générateur de vapeur d'un matériel encombrant avec toutes ses alimentations en fluides (alimentations électriques, eau de refroidissement). Le laser de puissance doit être installé très près de la trappe de visite de la boîte à eau, zone soumise à un niveau d'irradiation presque aussi élevé qu'à l'intérieur de la boîte à eau. On a pensé à éloigner le laser de la trappe de visite, mais cette distance ne peut être trop allongée sans compliquer les problèmes de visée qui deviennent très rapidement rédhibitoires. Par ailleurs, la tête de soudage utilisée présente un inconvénient lié au fait que la distance focale est maintenue constante et égale à la distance de tir par une butée à bille et un ressort d'application : ce système est générateur de frottements, d'à-coups et de vibrations dommageables pour la qualité de la soudure réalisée.

Dans le cas particulier d'application de l'invention évoqué ci-dessus c'est-à-dire dans celui de la réparation d'un tube de générateur de vapeur de réacteur nucléaire, et pour remédier aux inconvénients énumérés ci-dessus, la présente invention propose un procédé permettant de souder un manchon dans un tube de générateur de vapeur à l'aide d'une source d'énergie située à une distance importante du générateur de vapeur, par exemple à l'extérieur du batiment réacteur contenant celui-ci, et un dispositif permettant la mise en oeuvre de ce procédé.

Ce procédé permet d'effectuer les opérations suivantes simplement, de façon automatique, avec commande à distance depuis un poste de commande situé par exemple à l'extérieur du bâtiment réacteur :

- on introduit dans le tube à réparer, préalablement équipé d'un manchon par une méthode connue, une tête de soudage optique reliée par un tube flexible souple contenant une fibre optique de transport d'énergie lumineuse, un conduit d'alimentation en gaz inerte et des câbles de transmission de signaux de commandes, à un laser par exemple de type YAG situé près du poste de commande,

- on positionne la tête de soudage à l'altitude de travail,

- on règle la distance de focalisation du faisceau,

- et on procède au soudage sur une circonférence complète du manchon dans chacune des deux zones entourant la zone défectueuse du tube.

Le procédé et le dispositif selon l'invention sont plus précisément définis par les revendications annexées.

L'invention pourra être mieux comprise à l'aide de la description et des figures schématiques suivantes qui représentent :

Figures 1 A et 1B : Coupes longitudinales des deux variantes de manchons utilisés pour la mise en oeuvre de l'invention dans le cas particulier évoqué ci-dessus.

Figures 2 : Vue générale d'un dispositif pour la mise en oeuvre de l'invention dans ce même cas.

Figure 3 : Coupe longitudinale d'une partie constituant un ensemble terminal de ce dispositif de soudage.

Figure 4 : Coupe longitudinale à échelle agrandie de cette même partie du dispositif optique de soudage.

Figures 5A et 5B : Coupes longitudinales de deux variantes de la cellule optique de ce dispositif.

Figure 6 : Schéma de principe de réglage de focalisation de ce même dispositif.

Figure 7 : Vue partielle d'un dispositif de soudage modifié selon l'invention avec réglage automatique de focalisation.

On va tout d'abord, en se référant à ces figures, décrire de manière générale le procédé et le dispositif selon la présente invention, que celle-ci soit appliquée dans le cas particulier évoqué ci-dessus ou dans un autre cas.

Le soudage nécessite de réaliser une liaison entre d'une part un tube récepteur qui est par exemple un tube à réparer T et qui présente un axe A, et d'autre part un manchon à souder M qui présente une paroi S et qui a été préalablement mis en place dans ce tube.

Le procédé selon l'invention comporte d'abord une opération de mise en place dans ledit tube récepteur d'une tête de soudage comportant une cellule optique. Cette dernière comporte elle même :

- des moyens de renvoi optique constitués par un miroir 37 et propres à recevoir un faisceau lumineux de soudage selon l'axe du tube récepteur et à renvoyer ce faisceau vers la paroi du manchon à souder,

- et des moyens de focalisation 30 qui sont constitués par des lentilles L1, L2, L3 et une pièce optique 33 pour focaliser ce faisceau sur un point d'impact H situé sur cette paroi à souder et pour réaliser en ce point une soudure de ce manchon au tube récepteur.

Ce procédé comporte en outre une opération de création par un laser de soudage 104 d'un dit faisceau de soudage apte à réaliser la soudure, ce laser étant situé dans une zone de création de faisceau (celle d'un poste de commande laser 102 et d'un poste de commande porteur 108), à distance du tube récepteur T,

- et une opération de transport de faisceau pour amener ce faisceau de soudage à la cellule optique par une entrée du tube récepteur.

Cette opération de transport de faisceau comporte elle-même :

- une opération de mise en place d'une fibre optique pour qu'elle constitue une fibre de transport F, avec flexion de cette fibre pour qu'elle présente une entrée 105 dans ladite zone de création de faisceau et une sortie dans le tube récepteur selon l'axe de ce tube et en regard de la cellule optique,

- et une opération d'injection de faisceau de soudage au cours de laquelle le faisceau de soudage est injecté dans l'entrée de cette fibre de transport de manière à réaliser la soudure.

Une opération de rotation de point d'impact est réalisée grâce à une rotation de la cellule optique (ou au moins desdits moyens de renvoi optique (37)) autour de l'axe A du tube récepteur pour faire décrire au point d'impact H au moins un arc sur le manchon à souder M de manière à réaliser un cordon de soudure. Cette rotation est entrainée par un élément moteur tel qu'une cellule de motorisation 2 située hors du tube récepteur T en regard de l'entrée de celui ci. Cet élément moteur est relié mécaniquement auxdits moyens de renvoi optique par un ensemble prolongateur tubulaire. Ce dernier est constitué par une gaine souple 19, un embout rigide 20 et une pièce cylindrique 23. Il est disposé dans ce tube autour de la fibre optique de transport de manière à ne pas entrainer cette fibre en rotation.

Cet ensemble et/ou la cellule optique sont guidés par un moyen de centrage externe qui est constitué par exemple par un palier 21 et une brosse de centrage 42 et qui prend au moins un appui mobile sur la paroi S du manchon à souder M et/ou sur la surface interne du tube récepteur T. La fibre de transport F est guidée par un moyen de centrage interne qui est par exemple constitué par un palier 26 et qui prend au moins un appui mobile sur l'ensemble prolongateur. Cette fibre est guidée par ce moyen de centrage interne 26 de manière à permettre non seulement une rotation mais aussi un déplacement axial de cette fibre dans l'ensemble prolongateur, cet ensemble entrainant axialement la cellule optique 30, 37.

Après les opérations de mises en places de la tête de soudage et de la fibre de transport F et avant l'opération d'injection du faisceau de soudage dans l'entrée 105 de la fibre de transport, on effectue en outre :

    - une opération d'injection de faisceau de réglage au cours de laquelle un faisceau de réglage de puissance inférieure à celle du faisceau de soudage est injecté dans l'entrée de la fibre de transport, de manière à être transporté par cette fibre et renvoyé et focalisé par la cellule optique pour éclairer ledit point d'impact H et pour qu'un faisceau de lumière soit renvoyé à partir de ce point jusqu'à cette entrée,

    - et une opération de réglage de focalisation au cours de laquelle l'intensité du faisceau renvoyé est mesurée et où la fibre de transport est déplacée axialement par rapport à la cellule optique jusqu'à une position optimale où cette intensité atteint une valeur maximale et/ou prédéterminée, cette position optimale étant ensuite fixée.

Le moyen de centrage externe souple est monté à rotation libre par rapport à la tête de soudage 4, 5, 6 pour permettre la rotation de cette dernière sans déplacement de ce moyen de centrage, et l'opération de réglage de focalisation est effectuée avec rotation de cette tête de soudage et mise en mémoire des variations de l'intensité du faisceau renvoyé au cours de cette rotation.

Le dispositif selon l'invention comporte :
- le laser de soudage 104,
- la tête de soudage 4, 5, 6,
- la fibre de transport F,
- l'élément moteur 2,
- les moyens de centrage interne 26,
- l'ensemble prolongateur 19, 20, 23.

Il comporte en outre :
- un laser de réglage 106 pour créer ledit faisceau de réglage,
- un moyen de mesure tel qu'un récepteur photovoltaïque 52 pour mesurer l'intensité dudit faisceau renvoyé,
- et un moyen de positionnement axial qui est par exemple constitué par une pince 13 et une bague de réglage 16 et qui entraine un déplacement axial de ladite sortie de fibre 49 par rapport à la cellule optique 30, axial de ladite sortie de fibre 49 par rapport à la cellule optique 30, 37 de manière à réaliser la focalisation desdits faisceaux de réglage et de soudage sur ledit point d'impact H,

On va maintenant décrire plus en détails un mode de mise en oeuvre de l'invention dans le cas particulier évoqué précédemment.

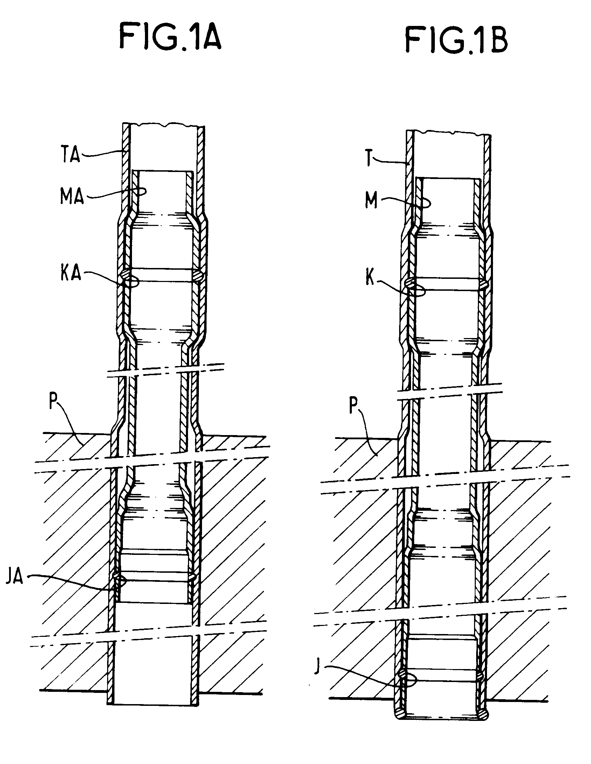

Les figures 1A et 1B représentent les deux types de manchons utilisés pour la réparation de tubes de générateur de vapeur de réacteur nucléaire :

    - la figure 1A montre une coupe en élévation d'un manchon MA utilisé pour réparer des tubes tels que TA situés dans la périphérie d'une plaque tubulaire P. Un cordon de soudure JA constitue un joint.

    - la figure 1B montre une coupe en élévation d'un manchon long utilisé pour réparer des tubes situés dans la partie centrale de la plaque tubulaire P ce qui est le cas de 80 % des tubes. Le joint inférieur J se trouve près de la face inférieure de la plaque.

Le joint supérieur KA ou K est dans les deux cas situé au delà de la face supérieure de la plaque P, près de l'extrémité supérieure du manchon.

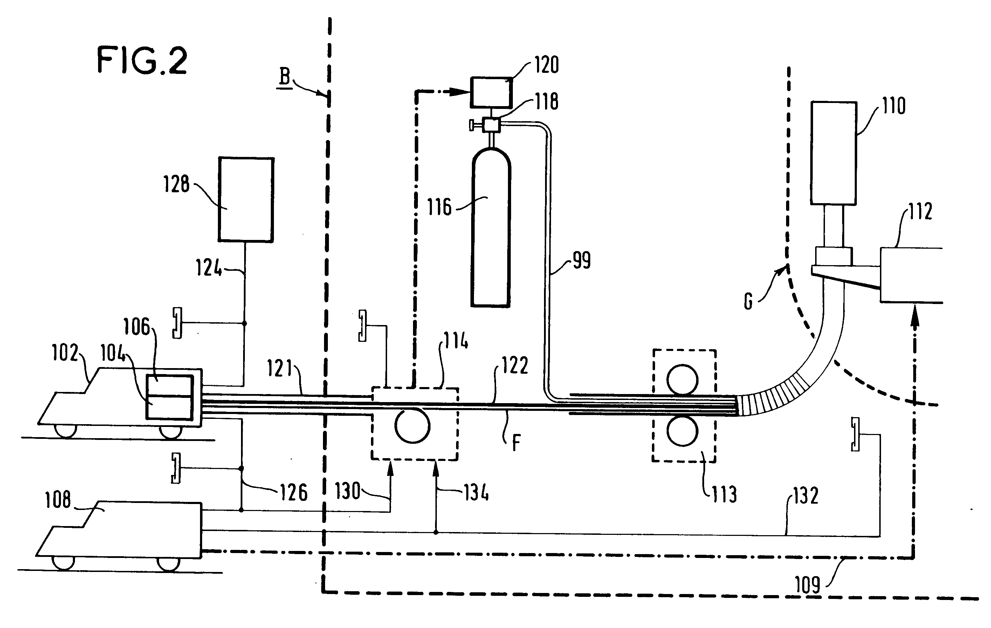

La figure 2 montre l'ensemble des éléments qui sont nécessaires à la mise en oeuvre du procédé et qui constituent le dispositif selon l'invention. Ce sont :

    - un poste mobile 102 de commande laser situé à l'extérieur du bâtiment réacteur B. Ce poste comprend un laser de soudage 104 du type YAG, un laser de réglage 106 du type Hélium-Néon émettant une lumière visible et couplé avec le laser YAG, des raccordements d'alimentation électrique générale, des raccordements pour l'eau de refroidissement, un rack de commande, et des moyens vidéo de contrôle. Le laser de soudage utilisé est de préférence un laser dopé au néodyme YAG, de longueur d'onde de 1,06 micromètres, et ayant une puissance de 1,2 Kw. Cependant tout autre laser ayant une émission de longueur d'onde ne dépassant pas cette valeur ou pour laquelle il existe une fibre optique transparente, et d'une puissance supérieure à 1000 w peut être utilisé.

    - un poste mobile 108 de commande porteur, situé par exemple à l'extérieur du bâtiment réacteur mais pouvant aussi être situé dans ce bâtiment, pour commander un porteur 112. Ce poste comprend également un rack de commande, des moyens vidéo de contrôle, des raccordements d'alimentation électrique générale, des raccordements 109 de liaison au porteur pour commander ce dernier,

    - un ensemble terminal 110 comportant la tête de soudage. Cet ensemble est porté à l'extrémité d'un bras du porteur 112 qui est installé dans la boîte à eau G du générateur de vapeur.

    - un tireur-pousseur 113 dans le bâtiment réacteur à proximité du générateur de vapeur,

- un poste 114 de relais des connexions dans le bâtiment réacteur,
- un système d'alimentation en gaz comportant une bouteille 116, des vannes 118 et des actionneurs de vanne 120,
- et un conduit flexible souple 121 reliant le poste de commande laser 102 au dispositif de soudage via le relais de connexion et le tireur-pousseur. Ce conduit contient des câbles 122 de transmission des signaux de commande du dispositif de soudage et une fibre optique F de transport de l'énergie lumineuse des lasers vers la tête de soudage contenue dans l'ensemble terminal 110. La fibre optique utilisée de préférence est une fibre optique silice. Mais toute autre fibre transparente au spectre électromagnétique de l'émission du laser utilisé peut convenir dans la mesure où son coefficient d'atténuation reste de l'ordre de 10 et de préférence 4 dB au Km ou inférieur pour la longueur d'onde du laser YAG.

Des câbles de télécommunications 124, 126, 130, 132 et 134 relient en outre ces divers éléments entre eux et à un terminal téléphonique 128.

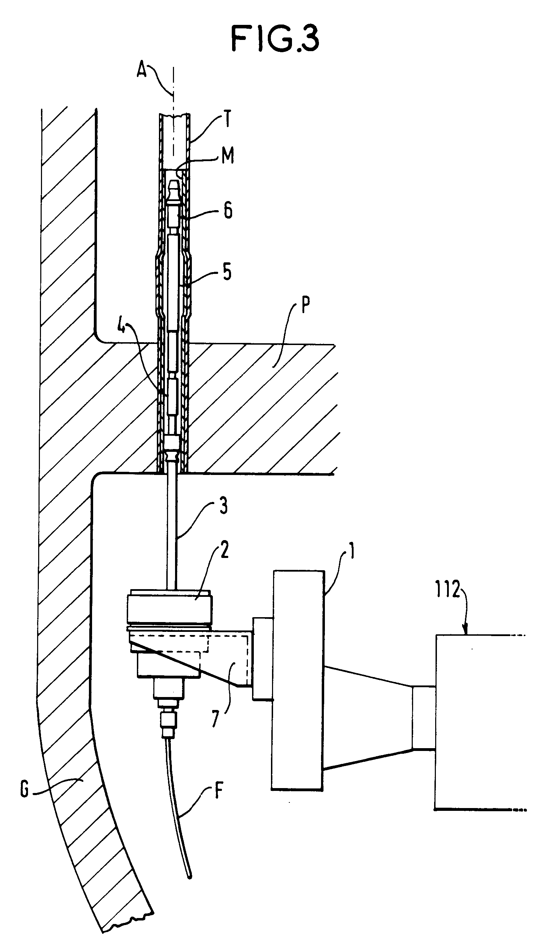

La figure 3 montre les éléments de l'ensemble terminal 110. Cet ensemble constitue une partie du dispositif de soudage installée dans le tube à réparer T, ou tube récepteur, qui a été préalablement équipé d'un manchon à souder M. Cet ensemble est représenté en position pour le soudage. Il est fixé sur un élévateur 1 qui monte et baisse, à l'extrémité du bras du porteur 112 et qui est utilisé pour introduire et positionner la tête de soudage dans le manchon. Il comporte une cellule de motorisation 2, et la tête de soudage. Cette dernière est constituée par un prolongateur souple 3, un prolongateur rigide 4, une cellule optique 5 et une ogive de guidage 6.

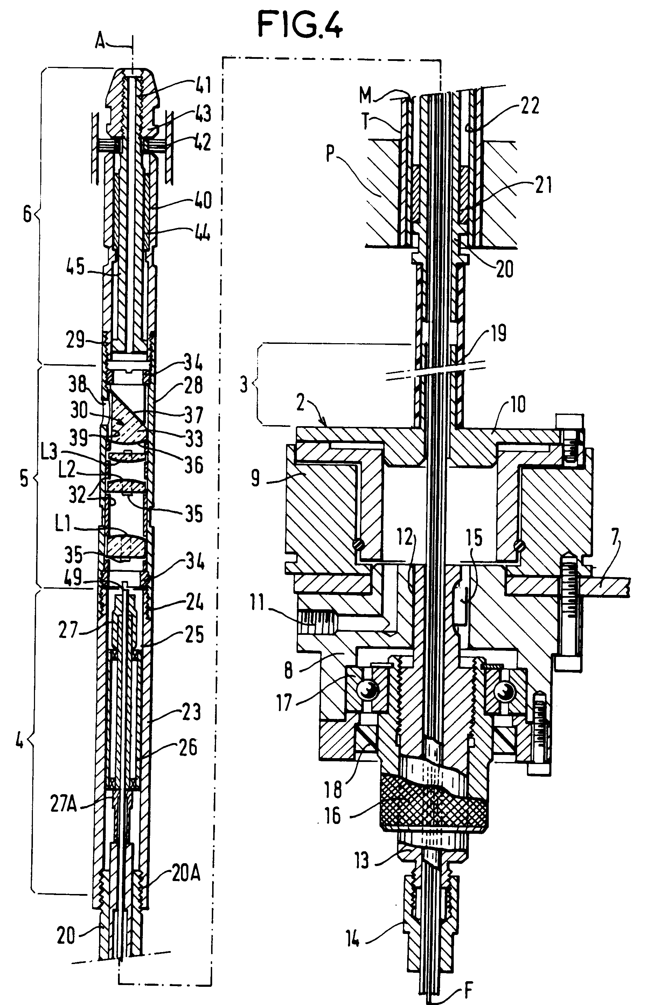

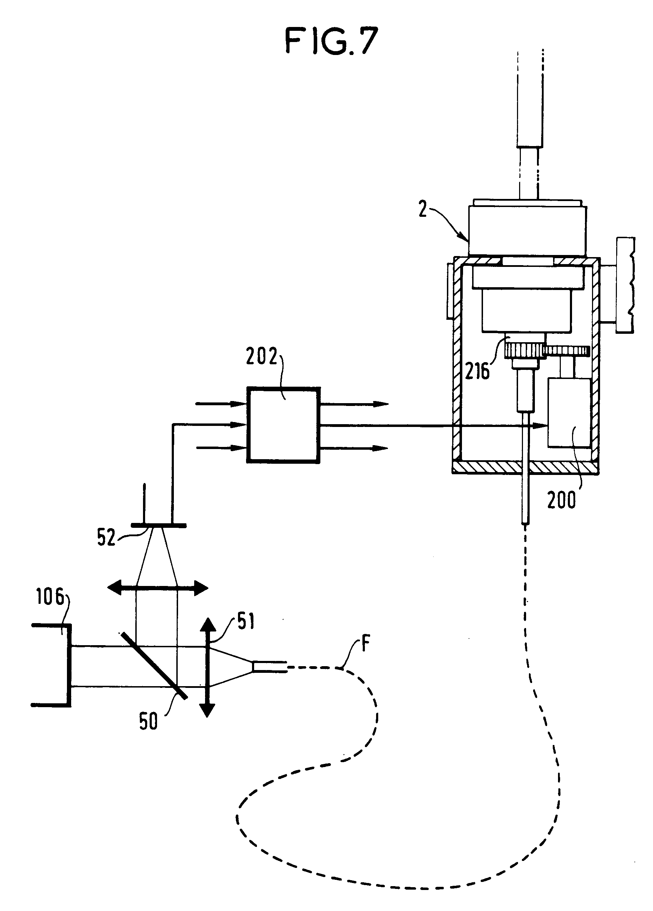

La figure 4 montre une coupe longitudinale de cet ensemble. La cellule 2 est fixée sur l'élévateur 1 par une équerre 7 et comporte un boîtier 8 et le socle 9 d'un plateau tournant montés dans l'axe l'un de l'autre. Ce plateau tournant a son socle fixe et un noyau tournant 10 sur lequel le prolongateur souple 3 est fixé par sertissage. Le boîtier 8 a un canal d'arrivée de gaz 11 et un alésage central 12. La fibre optique F est bloquée dans une pince 13 par l'écrou 14. Cette pince coulisse axialement dans l'alésage 12 et est maintenue fixe en rotation par une clavette 15. La position axiale de la pince par rapport au boîtier est réglable à l'aide d'une bague 16, ce qui permet de régler au montage la position de l'extrémité de la fibre par rapport à la tête de soudage. On comprend donc que l'altitude convenable de soudage est obtenue par réglage avec l'élévateur 1 de la position de l'équerre de supportage 7, et que le réglage axial de la position relative de la fibre optique par rapport au boîtier est obtenu par rotation de la bague 16. Cette bague est montée libre en rotation dans le boîtier par un roulement 17. Sur la figure, elle est représentée en version manuelle sans asservissement. On peut cependant facilement réaliser sa motorisation (voir figure 7). L'étanchéité du montage de la bague est assurée par un joint 18.

Le prolongateur souple 3 est composé d'un tronçon de gaine extérieure 19 souple emmanchée à une extrémité sur le noyau 10 du plateau tournant et comportant à l'autre extrémité un embout rigide 20 terminé par un filetage 20A pour vissage dans le prolongateur rigide 4. Sur cet embout est monté coulissant un palier lisse 21 dont le diamètre extérieur est très légèrement inférieur au diamètre du manchon M dans le cas représenté du manchonnage des tubes centraux ou du tube récepteur dans le cas du manchonnage des tubes périphériques. Ce palier assure le guidage en rotation de la tête de soudage. L'embout a un alésage intérieur 22 dans lequel passe la fibre optique.

Le prolongateur rigide 4 est constitué par une pièce cylindrique 23 comportant à une extrémité un taraudage qui coopère avec le filetage 20A du prolongateur souple, et, à l'autre extrémité un filetage 24 pour fixation de la cellule optique 5. Cette pièce a un alésage interne 25 dans lequel coulisse un palier 26. Ce palier est solidaire de la fibre optique F. Il est constitué par deux roulements à billes et une bague. Ce palier assure le guidage axial du déplacement de la fibre optique par rapport au prolongateur, et le guidage en rotation de l'ensemble de la tête de soudage par rapport à la fibre optique. L'extrémité de la fibre optique est sertie dans un embout 27 et une butée 27A, qui maintiennent les roulements du palier 26.

La cellule optique 5 est constituée par une portion de tube 28 dont les deux extrémités sont taraudées en 24 et 29. Le taraudage inférieur 24 reçoit le prolongateur rigide, le taraudage supérieur 29 reçoit l'ogive. Un empilage 30 de lentilles L1, L2 et L3, d'entretoises 32 et d'une pièce optique 33 est monté à l'intérieur de ce tube, fixé par deux écrous 34. Les lentilles et les écrous ont sur quatre génératrices réparties à 90 degrés des rainures 35 destinées au passage du gaz de balayage de la zone de soudure. La pièce optique 33 est constituée par un cylindre dont une des faces est sphérique 36 et l'autre est un miroir-plan 37 incliné à 45° sur l'axe A. Le faisceau lumineux pénètre par la face sphérique suivant l'axe longitudinal et subit une réflexion radiale. Au droit du faisceau réfléchi, le tube a une ouverture 38. Au niveau de cette ouverture, la pièce optique a une rainure 39 pour le passage du gaz de balayage.

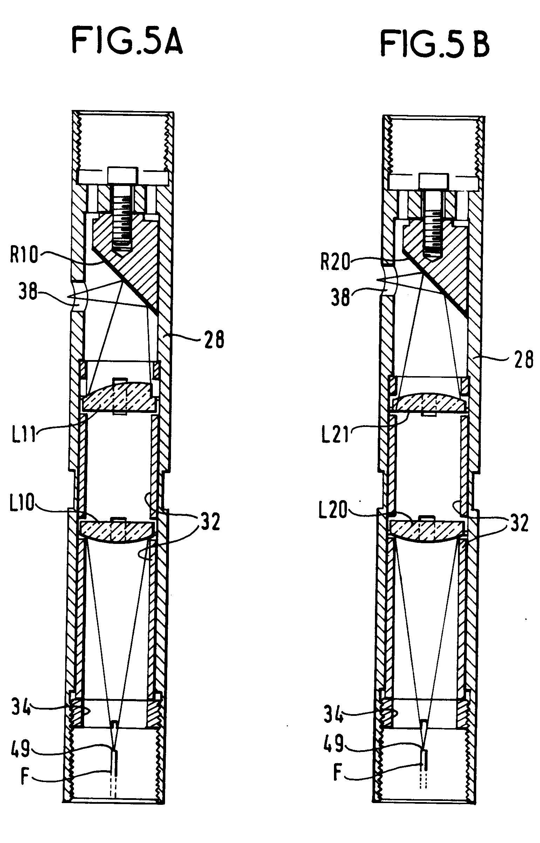

Les figures 5A et 5B montrent deux variantes de réalisation de cellule optique. La figure 5A représente une réalisation avec deux lentilles L10 et L11 dont la deuxième est décalée pour éloigner le miroir plan R10 de la tâche de focalisation. La figure 5B représente une configuration minimum à deux lentilles L20 et L21 et un miroir R20. Le mode de réalisation préférentiel est cependant celui de la figure 4.

L'ogive est constituée par un tube 40 dont l'extrémité inférieure est filetée pour vissage sur la cellule optique. A l'intérieur de ce tube un axe 41 porte une brosse de centrage 42 maintenue par un nez 43. Cet axe coulisse dans un coussinet 44 emmanché à force dans le tube 40; Un ressaut 45 limite le déplacement axial de l'axe dans le tube.

Au cours du soudage, la tête de soudage constituée par la gaine extérieure du prolongateur souple, la pièce cylindrique 20, le prolongateur rigide, la cellule optique et le tube de l'ogive effectue, sous l'action d'un moteur de rotation non représenté inclus dans la cellule de motorisation 2, une rotation complète de 360° guidée par la brosse de centrage 42 dans la partie supérieure et par le palier coulissant 21. Ce sont les deux points d'appui sur la surface interne eu manchon M. La fibre optique reste fixe pendant cette rotation, ainsi que l'axe porte brosse de l'ogive. Si deux ou plusieurs cordons légèrement décalés sont nécessaires, la tête de soudage peut être déplacée dans l'axe longitudinal grâce aux paliers coulissants 21 et 43. Les prolongateurs et la tête de soudage délimitent un espace annulaire continu autour de la gaine protectrice 47 de la fibre optique. Cet espace est interrompu par les roulements à billes du prolongateur rigide et par les rainures longitudinales au niveau des écrous et des lentilles. Il permet le passage du gaz de balayage du boîtier 8 jusqu'au dessus de la soudure.

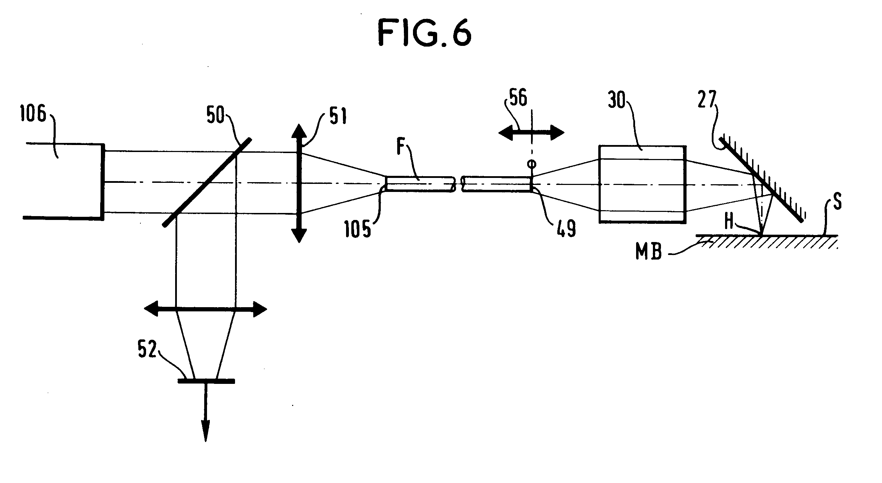

La figure 6 montre le principe du réglage de la distance de focalisation du faisceau sur la surface interne du manchon. On introduit la tête optique dans un calibre de réglage tubulaire MB présentant le même diamètre interne que le manchon à souder. On utilise alors le laser de réglage 106 du type Hélium Néon dont le faisceau de lumière visible emprunte exactement le même chemin que la lumière du laser de soudage. Une lame séparatrice 50 est installée à la sortie du laser 106, avant une lentille convergente 51 qui concentre la lumière sur l'entrée 105 de la fibre F. Cette lame laisse passer le faisceau lumineux issu du laser, mais réfléchit sur un récepteur photovoltaïque 52 le faisceau issu d'une tâche éclairée qui est centrée au point H sur la surface interne S du calibre MB et qui constitue un objet lumineux. Si on fait varier selon la flèche 56 la position axiale de l'extrémité de sortie 49 de la fibre optique par rapport à la cellule optique, qui comporte l'ensemble de lentilles 30 et le miroir 37, le signal fourni par le récepteur photovoltaïque 52 est maximal pour une position optimale de la fibre optique correspondant à une focalisation de la lumière au point d'impact H. Pour prérégler la position nécessaire au soudage, on recherche la position optimale par action sur la bague 16 et on stabilise cette position par immobilisation de cette bague, en tenant compte du décalage connu entre la position du foyer du faisceau HeNe et celle du foyer du faisceau YAG.

La figure 7 montre un dispositif de soudage modifié dans lequel la position axiale optimale de la fibre optique est obtenue par réglage automatique de la position d'une bague 216. Cette bague joue le même rôle que la bague 16, et elle est entrainée par un moteur de réglage 200 qui est commandé par une centrale d'acquisition et de gestion 202 après acquisition de données correspondant à un manchon à souder, le reste du dispositif étant inchangé. Une telle modification est compatible avec les buts de l'invention car le préréglage de la position de la fibre optique décrit ci-dessus pour l'obtention d'une tache focale minimale sur la paroi permet un soudage acceptable dans une plage de variation du diamètre du manchon de plus ou moins 0,2 mm, et que cette plage correspond à celle qui est rencontrée en pratique pour cette variation du diamètre autour du diamètre moyen, après expansion hydraulique du manchon. Cependant la valeur du diamètre moyen varie d'un tube à l'autre, d'où la nécessité, dans le dispositif non modifié, de changer le préréglage à chaque manchon. Le dispositif modifié évite de faire intervenir un opérateur à chaque tube. L'opération de réglage comporte deux phases : une phase d'acquisition de données pendant laquelle la centrale 202 commande le moteur de rotation, et une phase de réglage pendant laquelle cette même centrale commande le moteur de réglage 200. L'acquisition des données est obtenue en enregistrant la courbe du signal reçu sur le récepteur photovoltaïque 51 pendant une révolution de la tête de soudage, avec le faisceau émis par le laser 106. Par étalonnage du signal, on déduit la valeur moyenne du diamètre de la surface intérieure, puis par action avec le moteur de réglage on positionne la fibre optique pour que la distance focale corresponde à la valeur moyenne ainsi déterminée.

Une fois l'opération de réglage terminée l'entrée de la fibre F est éloignée de la lentille 51 et couplée au laser de puissance 104.

On va maintenant décrire la réalisation complète de la fixation d'un manchon par soudage dans un tube de générateur de vapeur à réparer, à l'aide du dispositif ainsi modifié. On installe à l'extérieur du bâtiment réacteur d'une centrale nucléaire un poste de commande laser 102 comprenant le laser YAG 104 et le laser visible 106, un poste de commande 108 d'un porteur 112 installé à l'intérieur de la boîte à eau d'un générateur de vapeur G ayant des tubes fuitards tels que T. Dans ces tubes on a accosté par une méthode connue des manchons tels que M à souder. Le porteur porte l'ensemble terminal 110 du dispositif comportant la tête de soudage qui est reliée reliée au poste de commande laser par un tube flexible contenant la fibre optique F et des câbles de transmission de signaux 124. On introduit à distance cet ensemble terminal avec la tête de soudage dans le manchon à souder, on place cette tête en position haute, près de l'extrémité supérieure du manchon à l'aide d'un élévateur 1, on envoie un faisceau laser visible dans la cellule optique 30, 37 et on enregistre la courbe de distance de l'axe A à la surface à souder sur une révolution. On règle alors la position de la fibre optique pour obtenir une tache focale minimale sur le diamètre moyen déterminé par la courbe de distance enregistrée, on envoie le faisceau laser de soudage et on soude sur une révolution le manchon sur le tube. On place ensuite avec l'élévateur la tête de soudage en position basse, près de l'extrémité inférieure du manchon, on envoie un faisceau laser visible dans la cellule optique et on enregistre la courbe de distance de l'axe à la surface à souder sur une révolution. On règle alors la position de la fibre optique pour obtenir une tâche focale minimale sur le diamètre moyen déterminé par la courbe de distance enregistrée, on envoie le faisceau laser de soudage et on soude sur une révolution le manchon sur le tube.

Quoique les modes de mise en oeuvre de l'invention décrits ci-dessus concernent seulement un cas particulier, on comprendra que l'invention peut s'appliquer également dans d'autres cas, par exemple pour la réparation de tubes d'un échangeur de chaleur peu accessible.

## Revendications

1. Procédé de soudage à distance d'un manchon dans un tube notamment dans un générateur de vapeur de centrale nucléaire, pour réaliser une liaison entre d'une part un tube récepteur (T) qui présente un axe (A), et d'autre part un manchon à souder (M) qui présente une paroi (S) et qui a été préalablement mis en place dans ce tube, ce procédé comportant

    - une opération de mise en place dans ledit tube récepteur d'une tête de soudage (4, 5, 6) comportant une cellule optique qui comporte elle même :

        - des moyens de renvoi optique (37) propres à recevoir un faisceau lumineux de soudage selon ledit axe (A) du tube récepteur et à renvoyer ce faisceau vers la paroi dudit manchon à souder,

        - et des moyens de focalisation (30) propres à focaliser ce faisceau sur un point d'impact (H) sur la paroi dudit manchon à souder de manière à réaliser en ce point une soudure de ce manchon audit tube récepteur,

        - ce procédé comportant en outre une opération de création par un laser de soudage (104) d'un dit faisceau de soudage apte à réaliser ladite soudure, ce laser étant situé dans une zone de création de faisceau (102) à distance dudit tube récepteur,

        - une opération de mise en place d'une fibre optique de transport (F) pour recevoir ledit faisceau de soudage et pour le guider jusqu'à ladite cellule optique,

        - et une opération de rotation de point d'impact réalisée grace à une rotation d'au moins lesdits moyens de renvoi optique (37) de ladite cellule optique (30, 37) autour dudit axe (A) du tube récepteur pour faire décrire audit point d'impact (H) au moins un arc sur ledit manchon à souder (M) de manière à réaliser un cordon de soudure,

    ce procédé étant caractérisé par le fait que ladite rotation des moyens de renvoi optique (37) est entrainée par un élément moteur (2) qui est situé hors dudit tube récepteur (T) en regard de l'entrée de celui ci et qui est relié mécaniquement auxdits moyens de renvoi optique par un ensemble prolongateur tubulaire (19, 20, 23), cet ensemble étant disposé dans ce tube autour de ladite fibre optique de transport (F) et de manière à ne pas entrainer cette fibre en rotation.

2. Procédé selon la revendication 1, caractérisé par le fait que ledit ensemble prolongateur (19, 20, 23) comporte une gaine souple (19), cet ensemble et/ou ladite cellule optique (30, 37) étant guidés par un moyen de centrage externe (21, 42) prenant au moins un appui mobile sur la paroi (S) dudit manchon à souder (M) et/ou sur ladite surface interne du tube récepteur (T), ladite fibre de transport (F) étant guidée par un moyen de centrage interne (26) prenant au moins un appui mobile sur ledit ensemble prolongateur.

3. Procédé selon la revendication 2, caractérisé par le fait que ladite fibre de transport (F) est guidée par ledit moyen de centrage interne (26) de manière à permettre non seulement une rotation mais aussi un déplacement axial de cette fibre dans ledit ensemble prolongateur (19, 20, 23), cet ensemble entrainant axialement ladite cellule optique (30, 37).

4. Procédé selon la revendication 1, dans lequel ladite tête de soudage (4, 5, 6) est munie d'un moyen de centrage externe souple (42) pour prendre appui sur toute sa périphérie sur la paroi (S) dudit manchon à souder (M), caractérisé par le fait que ledit moyen de centrage est monté à rotation libre par rapport à cette tête pour permettre la rotation de cette dernière sans rotation de ce moyen de centrage.

5. Dispositif de soudage à distance d'un manchon dans un tube notamment dans un générateur de vapeur de centrale nucléaire, pour réaliser une liaison entre d'une part un tube récepteur (T) qui présente un axe (A), et d'autre part un manchon à souder (M) qui présente une paroi (S) et qui a été préalablement mis en place dans ce tube, ce dispositif comportant

- un laser de soudage (104) pour créer un faisceau de soudage apte à réaliser une soudure dudit manchon à souder dans ledit tube récepteur,
- une tête de soudage (4, 5, 6) apte à être mise en place dans ledit tube récepteur et munie d'une cellule optique comportant elle-même
- des moyens de renvoi optique (37) pour recevoir un faisceau lumineux de soudage selon ledit axe (A) du tube récepteur et pour renvoyer ce faisceau vers la paroi dudit manchon à souder,
- et des moyens de focalisation (30) pour focaliser ce faisceau sur un point d'impact (H) sur la paroi dudit manchon à souder de manière à réaliser en ce point une soudure de ce manchon audit tube récepteur,
- ce dispositif comportant encore :
  - une fibre optique flexible constituant une fibre de transport (F) avec d'une part une entrée (105) pour recevoir ledit faisceau de soudage fourni par ledit laser de soudage (104) et d'autre part une sortie (49),
  - et des moyens de centrage interne (26) pour maintenir cette sortie par rapport à ladite cellule optique (30, 37) de manière que cette sortie soit disposée selon ledit axe (A) du tube récepteur (T) quand ladite tête de soudage (4, 5, 6) est placée dans ce tube,
  ce dispositif étant caractérisé en ce qu'il comporte en outre :
    - un élément moteur (2) restant à l'extérieur dudit tube récepteur (T),
    - un ensemble prolongateur (19, 20, 23) reliant cet élément moteur à ladite cellule optique (30, 37) pour entrainer cette cellule en rotation autour dudit axe (A) du tube récepteur de manière que ledit point d'impact (H) décrive au moins un arc pour réaliser un cordon de soudure, cet ensemble prolongateur entourant ladite fibre de transport (F),
    - lesdits moyens de centrage interne (26) prenant appui dans cet ensemble prolongateur et permettant une rotation de cet ensemble par rapport à cette fibre de manière que cette fibre ne soit pas entrainée en rotation.

6. Dispositif selon la revendication 5, caractérisé par le fait que ladite tête de soudage (4, 5, 6) est munie d'un moyen de centrage externe souple (42) monté libre en rotation autour dudit axe (A) du tube récepteur par rapport à cette tête pour prendre un appui frottant sur ladite paroi (S) dudit manchon à souder et rester immobile pendant ladite rotation de ladite cellule optique (30, 37).

**Patentansprüche**

1. Verfahren zum Einschweißen einer Muffe in ein Rohr aus der Entfernung, insbesondere in einem Dampferzeuger eines Kernkraftwerks, um eine Verbindung zwischen einem Aufnahmerohr (T), das eine Achse A aufweist, einerseits und einer einzuschweißenden Muffe (M), die eine Wand (S) aufweist und zuvor in diesen Rohr in Stellung gebracht wurde, andererseits herzustellen, bestehend aus:
   - einem Arbeitsvorgang zum Instellungbringen eines Schweißkopfs (4, 5, 6) mit einer optischen Zelle in dem genannten Aufnahmerohr, wobei die optische Zelle ihrerseits aufweist:
     - optische Reflektiermittel (37), die geeignet sind, ein Schweiß-Lichtbündel auf der genannten Achse (A) des Aufnahmerohrs zu empfangen und dieses Bündel auf die Wand der genannten zu schweißenden Muffe zu reflektieren,
     - und Fokussierungsmittel (30), die geeignet sind, dieses Bündel auf einen Auftreffpunkt (H) an der Wand der genannten zu schweißenden Muffe zu fokussieren, so daß an diesem Punkt eine Schweiße dieser Muffe an das genannte Aufnahmerohr ausgeführt wird,
   - wobei dieses Verfahren des weiteren aus einem Arbeitsvorgang zur Erzeugung eines genannten, zur Ausführung der genannten Schweiße geeigneten Schweißlichtbündels durch einen Schweißlaser (104) besteht, wobei sich dieser Laser in einem Bereich der Erzeugung des Lichtbündels (102) in Entfernung von dem genannten Aufnahmerohr befindet,
   - einem Arbeitsvorgang zum Instellungbringen einer Lichtleitfaser (F), um das genannte Schweißlichtbündel zu empfangen und es zu der genannten optischen Zelle zu leiten,
   - und einem Arbeitsvorgang zum Drehen des Auftreffpunkts, der durch eine Drehung von wenigstens den genannten optischen Reflektiermitteln (37) der genannten optischen Zelle (30, 37) um genannte Achse (A) des Aufnahmerohrs ausgeführt wird, um den genannten Auftreffpunkt (H) wenigstens einen Bogen auf der genannten zu schweißenden Muffe (M) beschreiben zu lassen, dergestalt daß eine Schweißnaht ausgeführt wird,
dadurch gekennzeichnet, daß die genannte Drehung der optischen Reflektiermittel (37) von einem Antriebselement (2) verursacht wird, das sich außerhalb des genannten Aufnahmerohrs (T) gegenüber dessen Eingang befindet und das mechanisch durch eine rohrförmige Verlängerungseinheit (19, 20, 23) mit den genannten optischen Reflektiermitteln verbunden ist, wobei diese Einheit in diesem Rohr um die genannte Lichtleitfaser (F) herum und dergestalt angeordnet ist, daß sie diese Faser nicht in Drehbewegung versetzt.

2. Verfahren nach Anspruch 1,
dadurch gekennzeichnet, daß die genannte Verlängerungseinheit (19, 20, 23) einen Schlauchmantel (19) aufweist, wobei diese Einheit und-/oder die genannte optische Zelle (30, 37) durch ein externes Zentriermittel (21, 42) geführt wird, das wenigstens zu einer örtlich veränderbaren Anlage an der Wand (S) der genannten zu schweißenden Muffe (M) und/oder an der genannten Innenfläche des Aufnahmerohrs (T) kommt, wobei genannte Lichtleitfaser (F) durch ein internes Zentriermittel (26) geführt wird, das wenigstens zu einer örtlich veränderbaren Anlage an der genannten Verlängerungseinheit kommt.

3. Verfahren nach Anspruch 2,
dadurch gekennzeichnet, daß die genannte Lichtleitfaser (F) durch genanntes internes Zentriermittel (26) so geführt wird, daß nicht nur eine Drehung, sondern auch ein axiales Verschieben dieser Faser in der genannten Verlängerungseinheit (19, 20, 23) möglich ist, wobei diese Einheit die genannte optische Zelle (30, 37) axial führt.

4. Verfahren nach Anspruch 1, bei dem der genannte Schweißkopf (4, 5, 6) mit einem elastischen, externen Zentriermittel (42) versehen ist, um mit seinem gesamten Umfang an der Wand (S) der genannten zu schweißenden Muffe (M) in Anlage zu kommen, dadurch gekennzeichnet, daß das genannte Zentriermittel zu diesem Kopf frei drehbar montiert ist, um die Drehung dieses letzteren ohne Drehung dieses Zentriermittels möglich zu machen.

5. Vorrichtung zum Einschweißen einer Muffe in ein Rohr aus der Entfernung, insbesondere in einem Dampferzeuger eines Kernkraftwerks, um eine Verbindung zwischen einem Aufnahmerohr (T), das eine Achse A aufweist, einerseits und einer einzuschweißenden Muffe (M), die eine Wand (S) aufweist und zuvor in diesen Rohr in Stellung gebracht wurde, andererseits herzustellen,

bestehend aus:
- einem Schweißlaser (104) zur Erzeugung eines Schweißlichtbündels, das geeignet ist, eine Schweiße der genannten in genanntem Aufnahmerohr einzuschweißenden Muffe (M) auszuführen,
- einem Schweißkopf (4, 5, 6), der geeignet ist, in genanntem Aufnahmerohr in Stellung gebracht zu werden, und mit einer optischen Zelle ausgestattet ist, die ihrerseits aufweist:
   - optische Reflektiermittel (37), zum Empfangen eines Schweiß-Lichtbündels auf der genannten Achse (A) des Aufnahmerohrs und zum Reflektieren dieses Bündels auf die Wand der genannten zu schweißenden Muffe,
   - und Fokussierungsmittel (30), zum Fokussieren dieses Bündels auf einen Auftreffpunkt (H) an der Wand der genannten einzuschweißenden Muffe, so daß an diesem Punkt eine Schweiße dieser Muffe an das genannte Aufnahmerohr ausgeführt wird,
- wobei diese Vorrichtung des weiteren besteht aus:
   - einer elastischen Lichtfaser, die eine Leitfaser (F) bildet mit einerseits einem Eingang (105) zum Empfangen des genannten Schweiß-Lichtbündels, das von genanntem Schweißlaser (104) erzeugt wird, und andererseits einem Ausgang (49),
   - und internen Zentriermitteln (26), um diesen Ausgang relativ zur genannten optischen Zelle (30, 37) dergestalt zu halten, daß dieser Ausgang auf der genannten Achse (A) des Aufnahmerohrs (T) angeordnet ist, wenn der genannte Schweißkopf (4, 5, 6) in dieses Rohr eingeführt wird,
dadurch gekennzeichnet, daß sie des weiteren besteht aus:
   - einem Antriebselement (2), das außerhalb des genannten Aufnahmerohrs (T) bleibt,
   - einer Verlängerungseinheit (19, 20, 23), die dieses Antriebelement mit der genannten optischen Zelle (30, 37) verbindet, um diese Zelle in eine Drehbewegung um genannte Achse (A) des Aufnahmerohrs herum zu versetzen, so daß der genannte Auftreffpunkt (H) wenigstens einen Bogen beschreibt, um eine Schweißnaht auszuführen, wobei diese Verlängerungseinheit die genannte Lichtleitfaser (F) umgibt,
   - den genannten internen Zentriermitteln (26), die in dieser Verlängerungseinheit in Anlage kommen und eine Drehbewegung dieser Einheit relativ zu dieser Faser dergestalt möglich machen, daß diese Faser nicht in Drehbewegung versetzt wird.

6. Vorrichtung nach Anspruch 5, dadurch gekennzeichnet, daß der genannte Schweißkopf (4, 5, 6) mit einem elastischen, externen Zentriermittel (42) versehen ist, das relativ zu diesem Kopf frei um die genannte Achse (A) des Aufnahmerohrs drehbar montiert ist, um in Reibungsanlage an der genannten Wand (S) der genannten zu schweißenden Muffe zu kommen und bei der genannten Drehbewegung der genannten optischen Zelle (30, 37) bewegungslos zu bleiben.

## Claims

1. A method of remotely welding a bush in a tube, in particular in a steam generator of a nuclear power station, in order to make a connection firstly between a receiver tube (T) having an axis (A), and secondly a bush (M) to be welded which includes a wall (S) and which has previously been installed in the tube, the method comprising:

an operation of inserting a weld head (4, 5, 6) into said receiver tube, said head including an optical cell which itself comprises:

optical reflection means (37) suitable for receiving a welding light beam along said axis (A) of the receiver tube and for reflecting said beam towards the wall of said bush to be welded; and

focusing means (30) suitable for focusing said beam on an impact point (H) on the wall of said bush to be welded in such a manner as to weld said bush to said receiver tube at said point;

said method further including an operation of creating such a welding beam by means of a welding laser (104), said beam being suitable for performing said welding, said laser being situated in a beam creation zone (102) at a distance from said receiver tube;

an operation of placing a transport optical fiber (F) for receiving said welding beam and for conveying it to said optical cell; and

an operation of rotating the impact point by rotating at least one of the optical reflection means (37) of said optical cell (30, 37) about said receiver tube axis (A) in order to cause said impact point (H) to describe at least an arc on said bush to be welded (M) so as to form a weld fillet;

said method being characterized by the fact that said rotation of the optical reflection means (37) is driven by a motor (2) situated outside said receiver tube (T) facing the inlet thereto and mechanically connected to said optical reflection means by a tubular extender assembly (19, 20, 23), said assembly being disposed in said tube around said transport optical fiber (F) in such a manner as to avoid rotating said fiber.

2. A method according to claim 1, characterized by the fact that said extender assembly (19, 20, 23) includes a flexible sheath (19) with said assembly and/or said optical cell (30, 37) being guided by external centering means (21, 42) having at least one moving bearing point on the wall (S) of said bush to be welded (M) and/or on said inside surface of the receiver tube (T), said transport fiber (F) being guided by an internal centering means (26) bearing on said extender assembly at at least one moving bearing point.

3. A method according to claim 2, characterized by the fact that said transport fiber (F) is guided by said internal centering means (26) so as to enable it not only to rotate but also to displace said fiber axially along said extender assembly (19, 20, 23), said assembly driving said optical cell (30, 37) axially.

4. A method according to claim 1, in which said weld head (4, 5, 6) is provided with flexible external centering means (42) in order to bear against the entire periphery of the wall (S) of said bush to be welded (M), and characterized in that said centering means are rotatably mounted to rotate freely relative to said head in order to allow said head to rotate without moving the centering means.

5. Apparatus for remotely welding a bush in a tube, in particular in a steam generator of a nuclear power station, in order to connect firstly a receiver tube (T) having an axis (A) and secondly a bush to be welded (M) having a wall (S) and previously put into place in said tube, said apparatus comprising:

a welding laser (104) for creating a welding beam suitable for welding said bush to be welded inside said receiver tube (T);

a weld head (4, 5, 6) suitable for being put into place inside said receiver tube and provided with an optical cell, itself comprising:

optical reflection means (37) for receiving a welding light beam along said axis (A) of the receiver tube and for reflecting said beam towards the wall of said bush to be welded; and

focusing means (30) for focusing said beam on an impact point (H) on the wall of said bush to be welded in such a manner as to weld said bush to said receiver tube at said point;

said apparatus further comprising:

a flexible optical fiber constituting a transport fiber (F) having an inlet (105) for receiving said welding beam provided by said welding laser (104) and also having an outlet (49); and

internal centering means (26) for maintaining said outlet relative to said optical cell (30, 37) in such a manner as to ensure that said outlet is disposed on said axis (A) of the receiver tube (T) when said weld head (4, 5, 6) is placed in said tube;

said apparatus being characterized by the fact that it further comprises:

a motor (2) that remains outside said receiver tube (T);

an extender assembly (19, 20, 23) connecting said motor to said optical cell (30, 37) in order to rotate said cell about said axis (A) of the receiver tube in such a manner as to cause said impact point (H) to describe at least an arc in order to form a weld fillet, said extender assembly surrounding said transport fiber (F);

said internal centering means (26) bearing inside said extender assembly and enabling relative rotation to take place between said assembly and said fiber in such a manner as to ensure that said fiber is not rotated.

6. Apparatus according to claim 5, characterized by the fact that said weld head (4, 5, 6) is provided with flexible external centering means (42) mounted free to rotate about said axis (A) of the receiver tube relative to said head in order to take up a friction abutment against said wall (S) of said bush to be welded and to remain stationary during said rotation of said optical cell (30, 37).

# FIG.1A

# FIG.1B

# FIG.2

EP 0 367 648 B1

# FIG.3

# FIG.4

# FIG.5A

# FIG.5 B

FIG.6

# FIG.7